# FASCICULE DE BREVET EUROPEEN

(11) **EP 2 771 199 B1**
(45) Date de publication et mention de la délivrance du brevet: **01.01.2020**
(21) Numéro de dépôt: 12773055.4
(22) Date de dépôt: 18.09.2012
(51) Int. Cl.: B60K 6/48, F16H 3/00, B60W 20/00, B60W 10/113, F16H 3/093

(54) **TRANSMISSION HYBRIDE TROIS ARBRES POUR VEHICULE AUTOMOBILE ET PROCEDE DE COMMANDE**
DREIWELLIGES HYBRIDGETRIEBE FÜR EIN KRAFTFAHRZEUG UND STEUERVERFAHREN
THREE-SHAFT HYBRID TRANSMISSION FOR A MOTOR VEHICLE AND CONTROL METHOD

(30) Priorité: 25.10.2011 FR 1159675
(43) Date de publication de la demande: 03.09.2014
(73) Titulaire: Renault S.A.S., 92100 Boulogne-Billancourt (FR)
(72) Inventeur: FREMAU, Nicolas, 78470 Saint Remy Les Chevreuse (FR); VIGNON, Antoine, 91430 Igny (FR)
(86) Numéro de dépôt international: PCT/FR2012/052084
(87) Numéro de publication internationale: WO 2013/060955

(56) Documents cités:
- FR-A1- 2 811 395
- US-A1- 2006 130 601
- US-A1- 2010 120 580
- US-A1- 2011 111 910

## Description

La présente invention se rapporte au domaine des transmissions hybrides pour véhicules automobiles, comportant d'une part un moteur thermique d'entraînement, et d'autre part une machine électrique.

Plus précisément, elle a pour objet Transmission hybride pour véhicule automobile muni d'un moteur thermique et d'une machine électrique d'entraînement, comportant deux arbres primaires concentriques, dont un arbre primaire plein relié au moteur thermique qui porte un pignon de descente sur un premier arbre secondaire relié aux roues du véhicule par un différentiel, un arbre primaire creux relié à la machine électrique qui porte deux pignons de descente sur le premier arbre secondaire, et un deuxième arbre secondaire renvoyant le mouvement de l'arbre primaire plein sur le différentiel par un pignon d'attaque.

Les transmissions hybrides ont pour intérêt principal de faire bénéficier la chaîne cinématique d'entraînement d'un véhicule, de deux sources d'énergies, thermique et électrique, dont les apports de couple peuvent se cumuler dans un mode dit hybride, ou être utilisées séparément, soit dans un « mode thermique pur » où la machine électrique ne fournit pas de couple à la chaîne de traction, soit dans un mode « électrique pur », où le moteur thermique ne fournit pas de couple à la chaîne de traction. D'autres fonctionnalités sont également requises, telles que la possibilité de lancer le moteur thermique à l'arrêt ou en roulage, en utilisant la machine électrique comme démarreur, ou celle d'utiliser la machine électrique en générateur de courant, pour charger les batteries.

Dans sa conception la plus simple, une transmission hybride telle que présentée ci-dessus assure l'ensemble des fonctions requises sur un seul rapport de démultiplication, c'est-à-dire sans la possibilité de bénéficier de plusieurs vitesses de marche avant, comme sur une transmission classique.

Par la publication US 2010/0120580, on connaît une transmission hybride pour véhicule automobile comprenant un arbre primaire plein relié au moteur thermique et un arbre creux relié à la machine électrique. Dans cette architecture, l'arbre primaire creux permet à la machine électrique d'entraîner un ou deux arbres secondaires, auxquels le moteur thermique peut également ajouter son mouvement, grâce à l'intervention de plusieurs coupleurs.

La présente invention vise à réaliser une transmission hybride disposant d'au moins deux rapports distincts en mode électrique, deux rapports distincts en mode thermique, et plusieurs rapports hybrides.

Dans ce but, elle prévoit :
- un premier moyen de couplage entre les deux arbres primaires pouvant occuper au moins trois positions dans lesquelles :
   - le moteur thermique est découplé de la chaîne cinématique reliant la machine électrique aux roues, ou couplé à celle-ci par l'intermédiaire du deuxième arbre secondaire (position 1),
   - l'arbre primaire relié au moteur thermique est couplé au premier arbre secondaire pour entraîner les roues avec ou sans l'appoint de la machine électrique (position 2), et
   - l'arbre primaire relié au moteur thermique est couplé à l'arbre primaire relié à la machine électrique, de manière à additionner leurs couples respectifs en direction des roues (position 3),
- un deuxième moyen de couplage permettant de coupler l'un ou l'autre des deux pignons de descente de l'arbre primaire creux, sur des pignons fous du premier arbre secondaire, et
- un troisième moyen de couplage permettant de coupler l'arbre primaire plein avec le deuxième arbre secondaire.

D'autres caractéristiques et avantages de l'invention apparaîtront clairement à la lecture de la description suivante d'un mode de réalisation non limitatif de celle-ci, en se reportant aux dessins annexés, sur lesquels :
- la figure 1 est un schéma d'architecture de la transmission proposée au point mort,
- la figure 2 correspond au démarrage et au roulage en mode électrique sur un rapport « électrique ville », et en marche arrière,
- la figure 3 correspond au roulage en mode électrique sur un rapport « électrique route »,
- la figure 4 correspond au mode de recharge de batterie,
- la figure 5 correspond au roulage en mode thermique sur un rapport « thermique autoroute »,
- la figure 6 correspond au roulage en mode hybride sur un premier rapport « hybride autoroute »,
- la figure 7 correspond au roulage sur un mode « hybride ville court »,
- la figure 8 correspond au roulage sur un rapport « hybride ville long 1 »,
- la figure 9 correspond au roulage sur un rapport « hybride ville long 2 »,
- la figure 10 correspond au roulage sur un rapport « hybride route »,
- la figure 11 correspond au roulage sur un rapport « hybride sport »
- la figure 12 correspond au roulage sur un autre mode thermique dit « thermique ville long ».

La transmission illustrée par les figures comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 (pignon fou de deuxième R2) pouvant être connecté avec celui-ci par un premier système de couplage 5 (C1) tel qu'un crabot, synchroniseur, ou autre type de coupleur progressif ou non). Un arbre primaire creux 6 est relié au rotor d'une machine électrique 7, de préférence (mais non obligatoirement) de type machine type axial discoïde. D'autres types de machine électrique sont également utilisables dans le cadre de l'invention, par exemple des machines radiales, à aimant ou à bobine d'excitation, ou des machines à réluctance. L'arbre creux 6 porte deux pignons fixes 8, 9, de première et de troisième. L'arbre creux 6 peut être relié à l'arbre primaire plein 1 par intermédiaire du premier système de couplage 5 (C1). Un premier arbre secondaire 10 porte deux pignons fous 12(R1) et 11(R3), de première et de troisième, et un pignon fixe de deuxième 14. On peut relier les pignons fous 11, 12 à l'arbre primaire par l'intermédiaire d'un deuxième système de couplage 13 C2, tel qu'un crabot, synchroniseur, ou autre type de coupleur progressif ou non. Le premier arbre secondaire 10 porte également un pignon fixe 15 de descente vers un différentiel 16 relié aux roues (non représentées) du véhicule.

A son extrémité gauche sur le schéma, l'arbre primaire plein 1 porte un pignon fixe 17 de quatrième, en prise avec un pignon fou de quatrième 18 (R4), porté par un deuxième arbre secondaire 19. Le deuxième arbre secondaire 19 porte également un troisième moyen de couplage 21 (C3) du pignon fou de quatrième 18 sur celui-ci. Le mouvement du deuxième arbre secondaire 19 est renvoyé par un pignon d'attaque 22 sur le différentiel 16.

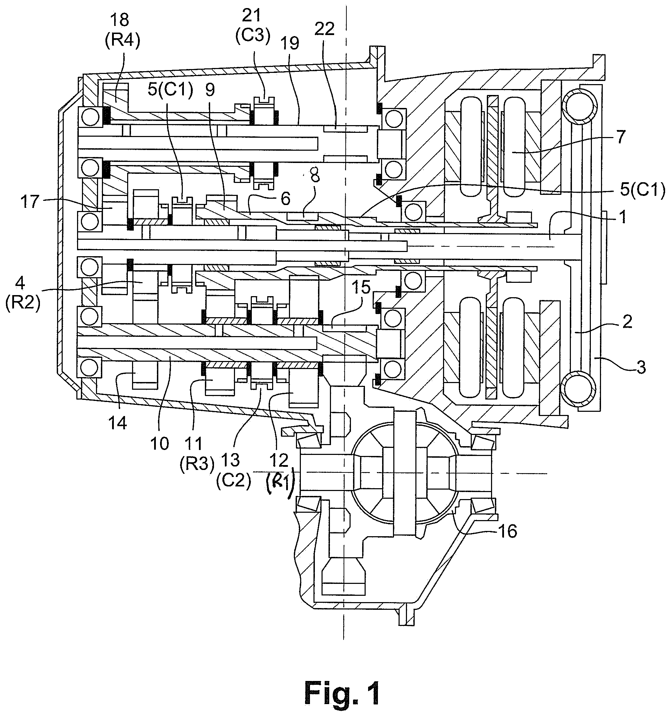

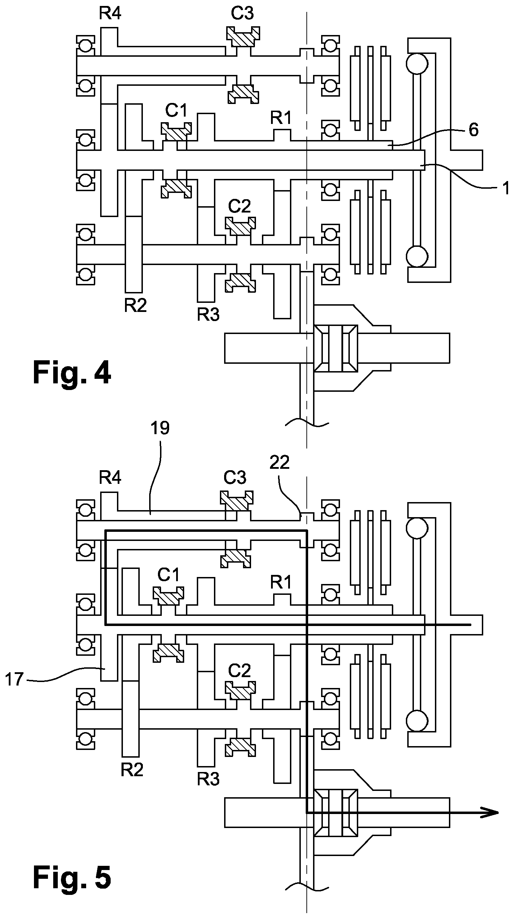

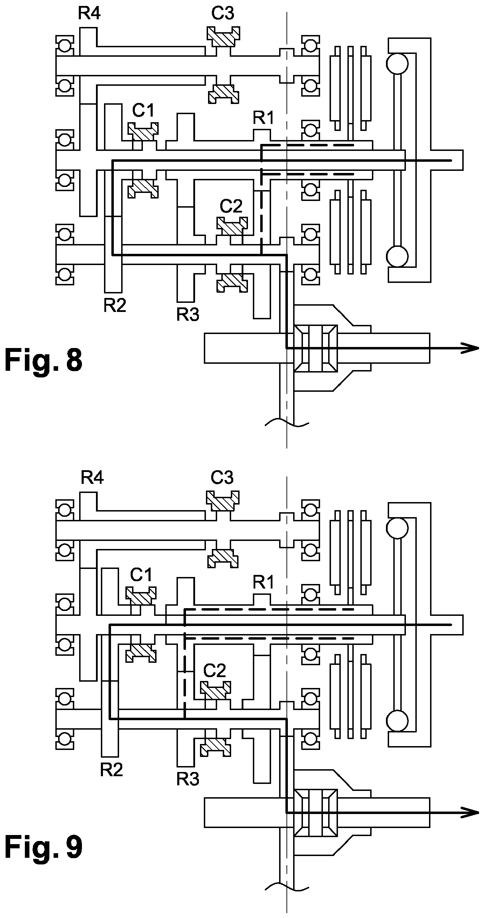

Le premier moyen de couplage C1 peut occuper au moins trois positions dans lesquelles :
- le moteur thermique est découplé de la chaîne cinématique reliant la machine électrique 7 aux roues, ou couplé à celle-ci par l'intermédiaire du deuxième arbre secondaire (position 1), sur les figures 1, 2, 3, 5, 11,
- l'arbre primaire relié au moteur thermique est couplé au premier arbre secondaire pour entraîner les roues avec ou sans l'appoint de la machine électrique (position 2), sur les figures 8, 9, 12, et
- l'arbre primaire relié au moteur thermique est couplé à l'arbre primaire relié à la machine électrique, de manière à additionner leurs couples respectifs en direction des roues (position 3), sur les figures 4, 6, 7, 10.

Par ailleurs, le moteur thermique peut entraîner un alternateur (non représenté) capable d'assurer les besoins énergétiques de la machine électrique en chargeant une batterie de traction haute tension. Un premier montage consiste alors à relier la batterie de traction à la batterie de bord du véhicule par un convertisseur de tension réversible. Une autre solution est que l'alternateur soit un alternateur haute tension connectable directement à une batterie d'alimentation de la machine électrique. Avec ces dispositions, le moteur thermique et l'alternateur de recharge de la batterie de bord peuvent constituer un groupe électrogène à faible coût, capable d'assurer les besoins énergétiques de la machine électrique de traction en mode électrique.

Sur la figure 1, les trois moyens de couplage C1, C2, C3, sont ouverts.

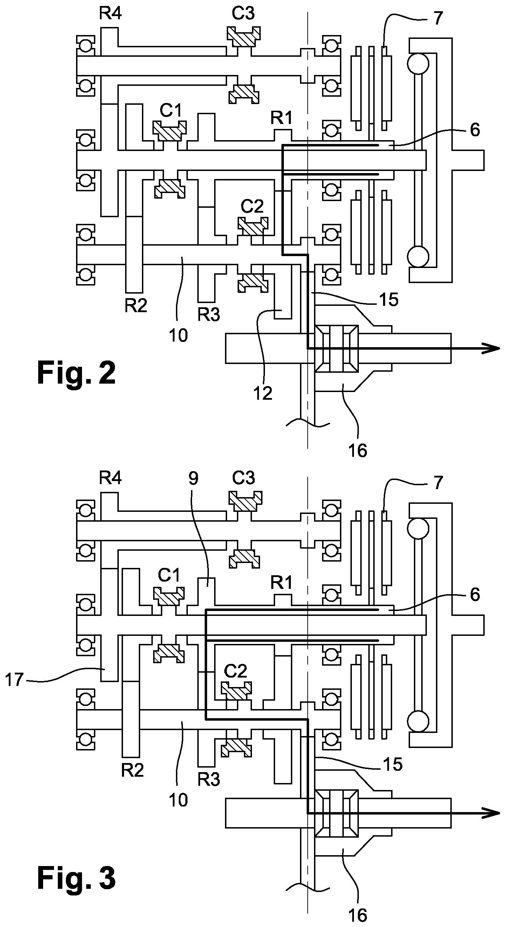

Sur la figure 2, C1 est ouvert (position 1), tandis que C2 est fermé de manière à solidariser le pignon fou du premier rapport 12 avec le premier arbre secondaire 10. La transmission est en mode électrique sur son premier rapport, dit rapport « électrique ville ». Le couple fourni par la machine électrique à l'arbre primaire creux descend par le premier pignon fixe R1 sur le pignon fou 12. C2 lie en rotation le pignon 12 et l'arbre 10. Le couple descend de la ligne secondaire sur le différentiel 16 par le pignon d'attaque 16.

Sur la figure 3, C1 est toujours ouvert (position 1), tandis que C2 est fermé, de manière à solidariser le pignon fou de troisième R3 avec le premier arbre secondaire 10. La transmission est en mode électrique sur le troisième rapport de la transmission, dit « électrique route ». Le couple fourni par la machine électrique 7 à l'arbre primaire creux 6, descend par le pignon fixe de troisième 9 sur le pignon fou de troisième R3. C1 lie en rotation le pignon R3 et l'arbre 10. Le couple descend de la ligne secondaire sur le différentiel 16 par le pignon 15.

Sur la figure 4, on est en mode de recharge de batterie. Seul C1 5 est fermé, en position 3. Les deux arbres primaires 1, 6 sont solidaires et le moteur thermique entraîne la machine électrique, fonctionnant alors en générateur.

Sur la figure 5, la transmission est sur son quatrième rapport, en mode thermique. Sur ce rapport dit rapport « thermique autoroute », C1 est ouvert (position 1). Seul C3 est fermé. Le couple fourni par le moteur thermique passe sur le deuxième arbre secondaire 19 par les pignons fixe 17 et fou R4 de quatrième, puis redescend sur le différentiel par le pignon 22.

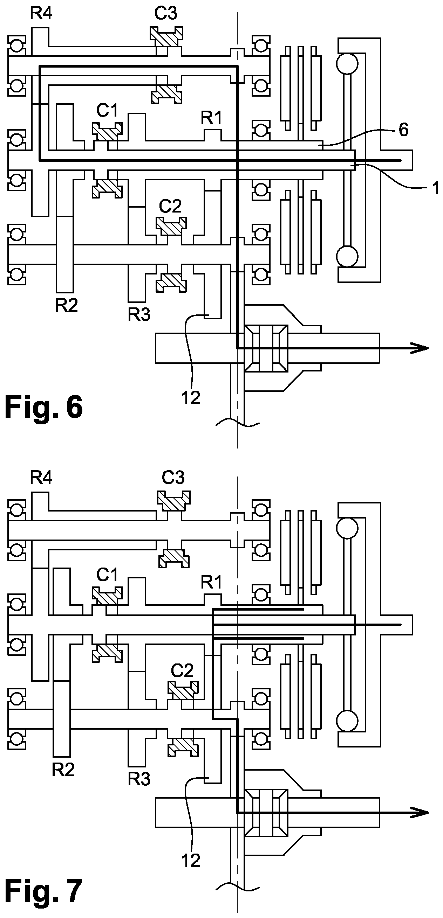

A partir de cette situation, on peut passer en mode hybride en rajoutant au moteur thermique l'appoint de la machine électrique, grâce à la fermeture de C1 en position 3. Le quatrième rapport devient alors un rapport « hybride autoroute », illustré par la figure 6.

Sur la figure 7, on est en mode hybride sur le premier rapport de la transmission, qui devient dans ce cas un rapport « hybride ville court ». C1 est fermé en position 3, de manière à solidariser les deux arbres primaires 1, 6 ; C2 est fermé sur le premier rapport (pignons R1, 12). Les couples du moteur thermique et de la machine électrique sont donc additionnés sur le premier rapport.

Les figures 8 et 9 illustrent deux modes hybrides intermédiaires dits « hybride ville long 1 » et « hybride ville long 2 », obtenus à partir du rapport « hybride ville court » de la figure 7. En maintenant le premier rapport engagé sur la machine électrique, on synchronise le moteur thermique sur le deuxième rapport avant de le coupler à au premier arbre secondaire 10 par le premier moyen de couplage C1 en position 2. Comme indiqué sur la figure 8, les couples s'additionnent.

Sans dégager C1, on peut dégager C2, puis synchroniser la machine électrique avec le premier arbre secondaire 10, avant d'engager C2 pour les rendre solidaires. Toujours sur le deuxième rapport de la transmission, on est ainsi passé sur le rapport « hybride ville long 2 » de la figure 9.

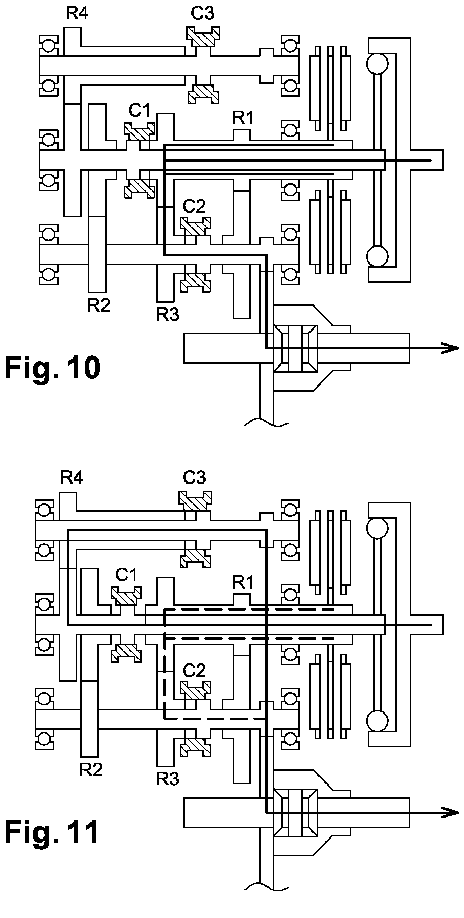

En basculant C1 en position 3 à partir de la figure 9 après synchronisation à vide du moteur thermique, on passe sur le troisième rapport dans la situation de la figure 10 dite « hybride route », avec addition des couples thermique et électrique.

On peut ensuite passer sur le quatrième rapport en mode hybride pour rejoindre la figure 11, en laissant la machine électrique maintenir la transmission sur le troisième rapport pendant le passage. Pour cela, on dégage C1 couplage (retour en position 1), puis on ferme C3, après avoir synchronisé à vide le moteur thermique.

A partir de la figure 10, si on ouvre C1, pour fermer C3 tout en maintenant C2 fermé, on peut rejoindre un rapport « hybride sport» illustré par la figure 11, à partir duquel on peut repasser sur le rapport « hybride autoroute » de la figure 6.

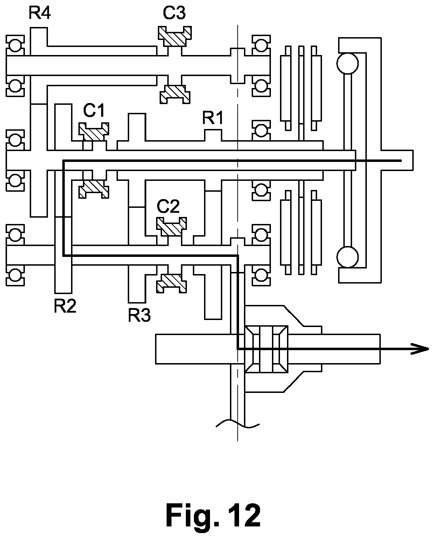

Enfin la figure 12 illustre un mode thermique sur le deuxième rapport, dit « thermique ville long », où seul C1 est fermé de manière à faire descendre le couple par R2 sur le rapport de deuxième.

En résumé, les trois positions du premier moyen de couplage 5 et l'intervention combinée du deuxième moyen de couplage 13 et du troisième moyen de couplage assurent à la transmission au moins les modes suivants :
- un mode électrique sur les deux premiers rapports de la transmission, dits « électrique ville » et « électrique court » (cf. figures 2 et 3),
- un mode thermique sur le deuxième et le quatrième rapport, dits respectivement « thermique ville long et » et « thermique autoroute » (cf. figures 12 et 5),
- un mode hybride sur le premier rapport, dit « hybride ville court » (cf. figure 7)
- deux modes hybrides sur le deuxième rapport, dits « hybride ville 1 » et « hybride ville 2 » (figures 8 et 9),
- un mode hybride sur le troisième rapport, dit « hybride route » (cf. figure 10) et sur le quatrième rapport dit « hybride autoroute » (figure 6) et « hybride sport » (figure 11), et
- un mode de recharge de batterie (cf. figure 4).

La transmission décrite ci-dessus trouve un intérêt particulier lorsqu'elle est commandée selon les deux séquences de fonctionnement suivantes dites « utilisation semaine » et « utilisation hybride », selon que l'utilisateur souhaite privilégier le mode électrique pour une conduite principalement urbaine ou journalière, où qu'il souhaite exploiter davantage les possibilités du mode hybride, pour augmenter son autonomie. Ces modes d'utilisation sont décrits ci-dessous comme des procédés de commande particulièrement avantageux, mais non limitatifs, de la transmission décrite.

L'« utilisation semaine » privilégie les deux rapports électriques, « électrique ville » et « électrique route » associés au « mode thermique autoroute » et éventuellement au mode « hybride autoroute ». Les deux rapports électriques sont alors utilisés en fermant C2 sur le pignon de première ou de troisième, jusqu'à un seuil de vitesse, où on passe sur le quatrième rapport en mode thermique, en ouvrant C2 et en couplant le moteur thermique aux roues grâce à C3. Sur le quatrième rapport, on peut aussi disposer en plus du rapport hybride en couplant le moteur thermique aux roues en fermant C3, tout en couplant les deux arbres primaires grâce à C2.

L'« utilisation hybride » est enrichie par le rapport thermique intermédiaire (deuxième rapport), notamment pour les changements de rapport sous couple. On utilise seulement un seul rapport électrique (sur le pignon de première), avant de passer successivement sur plusieurs rapports hybrides, où les deux premiers moyens de couplages C1 et C2 interviennent. Le premier rapport hybride utilisé en quittant le mode électrique est le « mode hybride ville court » de la figure 7. On peut ensuite passer au premier « rapport hybrides ville long » (hybride ville long 1) de la figure 8 au deuxième (figure 9) avec la même position de fermeture de C2, en couplant l'arbre primaire creux avec le premier arbre secondaire. Si on dégage C1, on peut bénéficier des deux rapports « hybride ville long » 1 et 2, selon que C2 engage R1 ou R3. Le « rapport hybride route » de la figure 10 est obtenu en couplant les deux arbres primaires sur le troisième rapport grâce à C1. Comme indiqué plus haut, le passage sur le mode hybride autoroute (figure 6) peut s'effectuer en passant par l'étape intermédiaire du rapport « hybride sport » de la figure 11.

Conformément à l'invention, les passages de vitesses entre les rapports hybrides s'effectuent sous couple. En particulier, l'ensemble de la séquence « utilisation hybride » s'effectue sans rupture de couple en maintenant la traction sur chaque passage, soit par le moteur thermique, soit par le moteur électrique. C'est le cas pour les passages montants et descendants entre « hybride ville court » à « hybride ville long 1 et 2 », « hybride ville long 2 », « hybride sport » et « hybride autoroute ».

## Revendications

1. Transmission hybride pour véhicule automobile muni d'un moteur thermique et d'une machine électrique d'entraînement (7), comportant deux arbres primaires (1, 6) concentriques, dont un arbre primaire plein (1) relié au moteur thermique qui porte un pignon de descente (4) sur un premier arbre secondaire (10) relié aux roues du véhicule par un différentiel (16), un arbre primaire creux (6) relié à la machine électrique qui porte deux pignons de descente (8, 9) sur le premier arbre secondaire (10), et un deuxième arbre secondaire (19) renvoyant le mouvement de l'arbre primaire plein (1) sur le différentiel (16) par un pignon d'attaque (22), **caractérisée en ce qu'**elle présente
- un premier moyen de couplage (C1) entre les deux arbres primaires (1, 6) pouvant occuper au moins trois positions dans lesquelles :
• le moteur thermique est découplé de la chaîne cinématique reliant la machine électrique (7) aux roues, ou couplé à celle-ci par l'intermédiaire du deuxième arbre secondaire (position 1),
• l'arbre primaire relié au moteur thermique (1) est couplé au premier arbre secondaire (10) pour entraîner les roues avec ou sans l'appoint de la machine électrique (position 2), et
• l'arbre primaire relié au moteur thermique (1) est couplé à l'arbre primaire relié à la machine électrique (6), de manière à additionner leurs couples respectifs en direction des roues (position 3),
- un deuxième moyen de couplage (C2) permettant de coupler l'un ou l'autre des deux pignons de descente (8, 9) de l'arbre primaire creux (6), sur des pignons fous (12, 11) du premier arbre secondaire (10), et
- un troisième moyen de couplage (C3) permettant de coupler l'arbre primaire plein (1) avec le deuxième arbre secondaire (19).

2. Transmission hybride selon la revendication 1, **caractérisée en ce que** les trois positions du premier moyen de couplage (C1) et l'intervention combinée du deuxième (C2) et du troisième (C3) moyen de couplage, lui assurent au moins :
- un mode électrique sur deux rapports,
- un mode thermique sur un deuxième et sur un quatrième rapport,
- un mode hybride sur trois rapports.

3. Transmission hybride selon l'une des revendications précédentes, **caractérisée en ce que** le moteur thermique entraîne un alternateur capable d'assurer les besoins énergétiques de la machine électrique en chargeant une batterie de traction haute tension.

4. Transmission hybride selon la revendication 3, **caractérisée en ce que** la batterie de traction est reliée à une batterie de bord du véhicule par un convertisseur de tension réversible

5. Transmission hybride selon la revendication 3, **caractérisée en ce que** l'alternateur est un alternateur haute tension connectable directement à une batterie d'alimentation de la machine électrique.

6. Procédé de commande d'une transmission hybride conforme à l'une des revendications 1 à 5, **caractérisé en ce qu'**on utilise la machine électrique (7) comme seule source d'énergie motrice sur deux rapports électriques en fermant le deuxième moyen de couplage (C2), jusqu'à un seuil de vitesse, au delà duquel on passe sur un rapport thermique en ouvrant le deuxième moyen de couplage (C2) et en couplant le moteur thermique aux roues par le troisième moyen de couplage (C3) .

7. Procédé de commande selon la revendication 6, **caractérisé en ce qu'**on dispose en plus d'un rapport hybride en couplant les deux arbres primaires par le deuxième moyen de couplage (C2) tout en maintenant couplés le moteur thermique aux roues par fermeture du troisième moyen de couplage (C3).

8. Procédé de commande d'une transmission hybride conforme à l'une des revendications 1 à 5, **caractérisé en ce qu'**on utilise seulement un seul rapport électrique, avant de passer successivement sur plusieurs rapports hybrides, où les deux premiers moyens de couplages (C1, C2) sont fermés.

9. Procédé de commande selon la revendication 8, **caractérisé en ce qu'**on peut obtenir deux rapports hybrides avec la même position de fermeture du deuxième moyen de couplage (C2), selon que les deux arbres primaires sont couplés ou que l'arbre primaire creux est couplé avec le premier arbre secondaire.

10. Procédé de commande selon la revendication 8 ou 9, **caractérisé en ce qu'**on peut obtenir deux rapports hybrides distincts avec la même position de fermeture du premier moyen de couplage (C1) selon que le deuxième moyen de couplage (C2) couple l'un ou l'autre des deux pignons de descente de l'arbre primaire creux sur le premier arbre secondaire, avec celui-ci.

11. Procédé de commande selon la revendication 8 ou 9, **caractérisé en ce que** les passages de vitesses entre les rapports hybrides s'effectuent sans rupture de couple en maintenant la traction sur chaque passage, soit par le moteur thermique, soit par le moteur électrique.

## Patentansprüche

1. Hybridgetriebe für ein Kraftfahrzeug, versehen mit einem Verbrennungsmotor und mit einer elektrischen Antriebsmaschine (7), das zwei konzentrische Primärwellen (1, 6), davon eine mit dem Verbrennungsmotor verbundene massive Primärwelle (1), die einen Zwischentrieb (4) auf eine erste Sekundärwelle (10) trägt, die mit den Rädern des Fahrzeugs durch ein Differenzial (16) verbunden ist, eine mit der elektrischen Maschine verbundene hohle Primärwelle (6), die zwei Zwischentriebe (8, 9) auf die erste Sekundärwelle (10) trägt, und eine zweite Sekundärwelle (19) aufweist, die die Bewegung der massiven Primärwelle (1) durch ein Antriebsritzel (22) auf das Differenzial (16) umlenkt, **dadurch gekennzeichnet, dass** es aufweist
- eine erste Kopplungseinrichtung (C1) zwischen den zwei Primärwellen (1, 6), die mindestens drei Stellungen einnehmen kann, in denen:
• der Verbrennungsmotor von der kinematischen Kette entkoppelt ist, die die elektrische Maschine (7) mit den Rädern verbindet, oder mit dieser mittels der zweiten Sekundärwelle (Stellung 1) gekoppelt ist,
• die mit dem Verbrennungsmotor (1) verbundene Primärwelle mit der ersten Sekundärwelle (10) gekoppelt ist, um die Räder mit oder ohne Unterstützung durch die elektrische Maschine (Stellung 2) anzutreiben, und
• die mit dem Verbrennungsmotor (1) verbundene Primärwelle mit der mit der elektrischen Maschine (6) verbundenen Primärwelle gekoppelt ist, um ihre jeweiligen Drehmomente in Richtung der Räder zu addieren (Stellung 3),
- eine zweite Kopplungseinrichtung (C2), die es ermöglicht, den einen oder anderen der zwei Zwischentriebe (8, 9) der hohlen Primärwelle (6) mit Losrädern (12, 11) der ersten Sekundärwelle (10) zu koppeln, und
- eine dritte Kopplungseinrichtung (C3), die es ermöglicht, die massive Primärwelle (1) mit der zweiten Sekundärwelle (19) zu koppeln.

2. Hybridgetriebe nach Anspruch 1, **dadurch gekennzeichnet, dass** die drei Stellungen der ersten Kopplungseinrichtung (C1) und das kombinierte Eingreifen der zweiten (C2) und der dritten (C3) Kopplungseinrichtung ihm mindestens zusichern:
- eine elektrische Betriebsart in zwei Gängen,
- eine thermische Betriebsart in einem zweiten und einem vierten Gang,
- eine hybride Betriebsart in drei Gängen.

3. Hybridgetriebe nach einem der vorhergehenden Ansprüche, **dadurch gekennzeichnet, dass** der Verbrennungsmotor einen Wechselrichter antreibt, der die Energiebedürfnisse der elektrische Maschine gewährleisten kann, indem er eine Hochspannungs-Traktionsbatterie lädt.

4. Hybridgetriebe nach Anspruch 3, **dadurch gekennzeichnet, dass** die Traktionsbatterie durch einen umkehrbaren Spannungswandler mit einer Bordbatterie des Fahrzeugs verbunden ist.

5. Hybridgetriebe nach Anspruch 3, **dadurch gekennzeichnet, dass** der Wechselrichter ein Hochspannungs-Wechselrichter ist, der direkt mit einer Versorgungsbatterie der elektrischen Maschine verbunden werden kann.

6. Verfahren zur Steuerung eines Hybridgetriebes gemäß einem der Ansprüche 1 bis 5, **dadurch gekennzeichnet, dass** die elektrische Maschine (7) als einzige Antriebsenergiequelle in zwei elektrischen Gängen verwendet wird, indem die zweite Kopplungseinrichtung (C2) geschlossen wird, bis zu einer Geschwindigkeitsschwelle, jenseits der in einen thermischen Gang übergegangen wird, indem die zweite Kopplungseinrichtung (C2) geöffnet und der Verbrennungsmotor mit den Rädern durch die dritte Kopplungseinrichtung (C3) gekoppelt wird.

7. Steuerverfahren nach Anspruch 6, **dadurch gekennzeichnet, dass** man außerdem über einen hybriden Gang verfügt, indem die zwei Primärwellen durch die zweite Kopplungseinrichtung (C2) gekoppelt werden und gleichzeitig der Verbrennungsmotor mit den Rädern durch Schließen der dritten Kopplungseinrichtung (C3) gekoppelt bleibt.

8. Steuerverfahren eines Hybridgetriebes gemäß einem der Ansprüche 1 bis 5, **dadurch gekennzeichnet, dass** nur ein elektrischer Gang verwendet wird, ehe nacheinander auf mehrere hybriden Gänge übergegangen wird, in denen die zwei ersten Kopplungseinrichtungen (C1, C2) geschlossen sind.

9. Steuerverfahren nach Anspruch 8, **dadurch gekennzeichnet, dass** zwei hybride Gänge mit der gleichen Schließstellung der zweiten Kopplungseinrichtung (C2) erhalten werden können, je nachdem, ob die zwei Primärwellen gekoppelt sind oder ob die hohle Primärwelle mit der ersten Sekundärwelle gekoppelt ist.

10. Steuerverfahren nach Anspruch 8 oder 9, **dadurch gekennzeichnet, dass** zwei unterschiedliche hybride Gänge mit der gleichen Schließstellung der ersten Kopplungseinrichtung (C1) erhalten werden können, je nachdem, ob die zweite Kopplungseinrichtung (C2) den einen oder den anderen der zwei Zwischentriebe der hohlen Primärwelle auf die erste Sekundärwelle mit dieser koppelt.

11. Steuerverfahren nach Anspruch 8 oder 9, **dadurch gekennzeichnet, dass** die Gangschaltungen zwischen den hybriden Gängen ohne Drehmomentunterbrechung erfolgen, indem der Antrieb bei jeder Gangschaltung entweder durch den Verbrennungsmotor oder durch den Elektromotor aufrechterhalten wird.

## Claims

1. Hybrid transmission for a motor vehicle equipped with a thermal engine and an electric drive machine (7), comprising two concentric primary shafts (1, 6), including a solid primary shaft (1) connected to the thermal engine which supports one intermediate drive (4) on a first secondary shaft (10) connected to the wheels of the vehicle via a differential (16), a hollow primary shaft (6) connected to the electric machine which supports two intermediate drives (8, 9) on the first secondary shaft (10), and a second secondary shaft (19) transmitting the movement of the solid primary shaft (1) to the differential (16) by a drive pinion (22), **characterized in that** it exhibits
- a first means of coupling (C1) between the two primary shafts (1, 6) capable of occupying at least three positions, in which:
• the thermal engine is decoupled from the kinematic chain connecting the electric machine (7) to the wheels, or is coupled to the latter by means of the second secondary shaft (position 1),
• the primary shaft connected to the thermal engine (1) is coupled to the first secondary shaft (10) in order to drive the wheels with or without the contribution made by the electric machine (position 2), and
• the primary shaft connected to the thermal engine (1) is coupled to the primary shaft connected to the electric machine (6), in such a way as to add together their respective torques in the direction of the wheels (position 3).
- a second means of coupling (C2) making it possible to couple one or other of the two intermediate drives (8, 9) of the hollow primary shaft (6) to idler pinions (12, 11) of the first secondary shaft (10), and
- a third means of coupling (C3) permitting the solid primary shaft (1) to be coupled to the second secondary shaft (19).

2. Hybrid transmission according to Claim 1, **characterized in that** the three positions of the first means of coupling (C1) and the combined intervention of the second (C2) and of the third (C3) means of coupling provide it with at least:
- an electric mode on two ratios,
- a thermal mode on a second ratio and a fourth ratio;
- a hybrid mode on three ratios.

3. Hybrid transmission according to either of the preceding claims, **characterized in that** the thermal engine drives an alternator that is capable of supplying the energy-related needs of the electric machine by charging a high-voltage traction battery.

4. Hybrid transmission according to Claim 3, **characterized in that** the traction battery is connected to an on-board battery of the vehicle by means of a reversible voltage converter.

5. Hybrid transmission according to Claim 3, **characterized in that** the alternator is a high-voltage alternator that is directly connectable to a supply battery of the electric machine.

6. Control method for a hybrid transmission according to one of Claims 1 to 5, **characterized in that** the electric machine (7) is used as a single source of motive energy in two electric ratios by closing the second means of coupling (C2) until a speed threshold is reached, from which a shift takes place to a thermal ratio by opening the second means of coupling (C2) and by coupling the thermal engine to the wheels via the third means of coupling (C3).

7. Control method according to Claim 6, **characterized in that** there is also available a hybrid ratio by coupling the two primary shafts by the second means of coupling (C2) while keeping the thermal engine coupled to the wheels by closing the third means of coupling (C3).

8. Control method for a hybrid transmission according to one of Claims 1 to 5, **characterized in that** only one electric ratio is used, before changing successively to a plurality of hybrid ratios, where the first two means of coupling (C1, C2) are closed.

9. Control method according to Claim 8, **characterized in that** it is possible to obtain two hybrid ratios with the same position of closing of the second means of coupling (C2), depending on whether the two primary shafts are coupled, or whether the hollow primary shaft is coupled to the first secondary shaft.

10. Control method according to Claim 8 or 9, **characterized in that** it is possible to obtain two distinct hybrid ratios with the same position of closing of the first means of coupling (C1), depending on whether the second means of coupling (C2) is coupling one or other of the two intermediate drives of the hollow primary shaft on the first secondary shaft with the latter.

11. Control method according to Claims 8 or 9, **characterized in that** the changes in gear between the hybrid ratios are performed without interrupting the torque by maintaining the traction during each shift, either by the thermal engine or by the electric motor.
